# DEMANDE DE BREVET EUROPEEN

(11) **EP 0 642 868 A1**
(43) Date de publication de la demande: **15.03.1995**
(21) Numéro de dépôt: 94114063.4
(22) Date de dépôt: 08.09.1994
(51) Int. Cl.: B23H 11/00

(54) **Machine d'électroérosion avec un bâti de structure nouvelle**

(30) Priorité: 10.09.1993 CH 2715/93
(71) Demandeur: CHARMILLES TECHNOLOGIES S.A., CH-1217 Meyrin 1 (CH)
(72) Inventeur: Girardin, Roger, CH-1214 Vernier (CH)

(57) **Abrégé**

Machine d'électroérosion pprésentant un bâti en forme de cube, constitué par quatre parois verticales reliées entre elles de manière à délimiter une enceinte carrée, toutes solidaire d'un même socle formant la face inférieure du cube ainsi que de l'élément horizontal, percé d'une ouverture, formant la face supérieure du cube. Un ensemble constitué par un dispositif pour déplacer la tête d'usinage selon l'axe Z et par au moins l'un des chariots du système à mouvements croisés déplacant la tête d'usinage selon les axes de référence X et Y de la machine, est monté au-dessus de la face supérieure du cube; l'ouverture ménagée dans cette face supérieure est profilée de manière à laisser la liberté à cet ensemble de se déplacer selon au moins l'un des axes X et Y; le bac d'usinage et la table de travail peuvent être fixes pendant l'usinage et disposés à l'intérieur du cube; au moins certaines des quatre parois verticales sont largement évidées de manière à rendre accessible la zone de travail. Cette structure en cube ouvert est avantageusement réalisée sous forme de monobloc.

## Description

La présente invention concerne une nouvelle structure pour le bâti d'une machine d'électroérosion, en particulier de fraisage par électroérosion. Rappelons en quoi consiste cette dernière technique : on usine une cavité ou un relief à trois dimensions en évidant l'électrode-pièce, de préférence à grande vitesse, avec une électrode-outil rotative, de forme simple et indépendante du contour souhaité. On évite donc la fastidieuse conception et fabrication d'électrodes de forme complexes. On peut éventuellement procéder par couches successives avec compensation de l'usure des électrodes-outil selon la méthode décrite dans la demande (E. 224) ou EP 555 818 de la demanderesse. Il s'agit d'un usinage à fort taux d'usure; la longueur des électrodes-outil de forme simple diminue rapidement, mais sans usure latérale apparente. La géométrie du volume tridimensionnel à évider a été mémorisée sous forme d'une superposition de feuillets (ou couches) virtuelles parallèles. L'extrémité active de l'électrode-outil décrit des mouvements de va-et-vient, ou autres, dans le plan de chacun de ces feuillets, de manière à les éroder successivement jusqu'au fond de la cavité à usiner. Elle avance le long d'un chemin d'outil plan dit "à usure nulle", dont les coordonnées selon les axes X et Y ont été mémorisées également.

Comme en enfonçage, contournage ou perçage EDM, l'outil est serré dans un porte-outil verrouillé sur une tête d'usinage rotative et mobile selon l'axe Z, tandis que la pièce à usiner est posée et serrée sur une table de travail fixe ou non par rapport au bâti de la machine. Le mouvement relatif (mouvement X,Y) entre la tête d'usinage (et l'outil) et la pièce à usiner est obtenu en général grâce à un système à mouvements croisés. Les machines EDM connues présentent toutes sortes de variantes:
- la tête est fixe selon les axes X et Y et c'est la pièce à usiner et sa table de travail, montées sur un système à mouvements croisés selon les axes X et Y qui se déplace;
- la pièce à usiner et sa table de travail sont fixes et c'est le dispositif mobile selon l'axe Z, sur lequel est fixée la tête d'usinage ainsi que les organes actionnant la rotation de l'outil, qui eat actionné par un système à mouvements croisés selon les axes X et Y ;
- la tête se déplace par exemple selon l'axe X, le long du fronton d'un portique monté sur le socle, de part et d'autre de la zone de travail; c'est le portique ou la pièce à usiner et sa table de travail qui se dépace selon l'axe Y.

Ces variantes correspondent aux deux types de structure connus pour les machines d'électroérosion: à colonne (ou "en C") ou à portique. Dans les deux cas, le bâti comporte un socle qui supporte le bac de travail.

Dans la structure en C, une colonne verticale est liée de façon rigide à ce socle, et une console portant le chariot mobile selon Z sur lequel est fixée la tête d'usinage ainsi que les organes actionnant la rotation de l'outil, est montée en porte-à-faux sur cette colonne. Le système à mouvements croisés selon les axes X et Y repose en général sur le socle, sous le bac de travail (c'est la pièce à usiner qui est mobile); ce système peut aussi être intégré à la colonne (seule la tête d'usinage est mobile), soit à l'extrémité du chariot mobile portant la tête d'usinage, soit à l'endroit où il est rattaché à la colonne.

Dans la structure en portique, deux colonnes ou épaulements s'élèvent de part et d'autre du socle et sont liés de façon rigide à une traverse sur laquelle est monté le chariot mobile selon Z sur lequel est fixée la tête d'usinage ainsi que les organes actionnant la rotation de l'outil, ce dernier surplombant la zone d'usinage et le bac de travail. En général ce chariot est aussi mobile le long de la traverse, selon l'axe X. Soit c'est la pièce à usiner qui est mobile selon l'axe Y, soit le portique, afin d'amener la pièce sous la tête d'usinage.

Ces deux types se retrouvent aussi en électroérosion par fil.
Il est bien connu qu'une construction en portique est plus rigide, plus stable, moins sensible aux vibrations que la structure en C. Mais le désavantage de la structure en portique est que la pièce est beaucoup moins accessible que dans une machine en C. C'est pourquoi les machines en portique présentent en général un portique mobile selon l'axe Y pour décaler la table de travail portant la pièce à usiner et son système de bridage par rapport aux montants du portique.

Contrairement aux techniques d'enfonçage EDM classiques (enfonçage, enfonçage planétaire, perçage, contournage) le fraisage EDM est réalisé en général avec un courant d'usinage de très forte densité (parfois une ou plusieurs centaines d'ampères/cm²), et avec de très grandes vitesses de rotation de l'électrode-outil (un ou plusieurs milliers de tours/mn). Par contre, celle-ci est en général un cylindre de faible diamètre pouvant être creux; elle est donc très légère par comparaison avec les outils utilisés habituellement en enfonçage classique. De plus, l'extrémité active de l'électrode-outil se déplace selon un va-et-vient ou une spirale dans le plan de chacun de ces feuillets, donc avec de brusques changements de direction. Enfin, pour pouvoir usiner sans usure latérale apparente on travaille avec un très fort taux d'usure (par exemple de 20 à 50 %); les vitesses d'avance sur les chemins d'outil sont donc beaucoup plus grandes qu'en enfonçage planétaire ou contournage, par exemple; elles peuvent être de l'ordre de 10 mm/sec . Signalons que la chaleur dégagée est également plus importante. Les contraintes ne sont donc pas les mêmes que pour les techniques d'enfonçage EDM classiques et se rapprocheraient parfois de celles rencontrées en électroérosion par fil.

Le but de la présente invention était de trouver une structure de bâti mieux adaptée à ce nouveau type de contraintes que les structures connues, en particulier avec la plus grande symétrie possible et évitant tout porte-à-faux. Une telle structure, objet de la présente invention est définie aux revendications 1 à 4.

Contrairement à la tradition respectée jusqu'à ce jour en électroérosion, selon laquelle une machine EDM devait avoir l'une de ces deux structures ci-dessus, la nouvelle structure selon la présente invention n'est ni une machine à colonne, ni à proprement parler une machine à portique. Il s'agit d'une machine EDM de type nouveau, destinée à usiner une pièce-électrode stationnaire (fixe par rapport au bâti); son bâti forme un cube délimité par quatre parois verticales dont au moins certaines sont largement évidées de manière à rendre accessible la zone de travail; elles sont toutes solidaires d'un même socle formant la face inférieure du cube, ainsi que de l'élément horizontal percé d'une ouverture, formant la face supérieure du cube; celle-ci supporte l'ensemble constitué par au moins l'un des chariots coulissant selon les axes de référence X et Y et le dispositif pour déplacer la tête d'usinage selon l'axe Z.

Elle a été développée par la demanderesse en relation avec le fraisage EDM par couches, mais peut être aussi très avantageusement utilisée pour d'autres types d'usinage où sont requises une bonne maîtrise des déplacements de l'outil, une stabilité et compacité du bâti et une bonne accessibilité de la zone d'usinage.
la nouvelle structure en cube ouvert selon la présente invention est encore plus stable que les portiques connus, en particulier suite au fait que les masses en mouvement reposent sur quatre points d'appui au lieu de deux et que ces points sont tous solidaires d'un même socle; tout porte-à-faux est évité; elle absorbe mieux les vibrations dues aux grandes vitesses de rotation de l'électrode; la précision et la fiabilité de l'usinage en sont améliorées, ainsi que le confort de l'utilisateur, car le bruit est pratiquement supprimé, malgré les grandes vitesses de rotation utilisées;

Une machine présentant une structure aussi symétrique résiste mieux aux déformations thermiques; si elles ont lieu elles sont symétriques et ont donc moins de conséquences sur la précision; les variations de température du bain de diélectrique contenu dans le bac de travail ne se transmettent plus inégalement au bâti de la machine qui se déforme alors de manière incontrôlable, mais au contraire, symétriquement au bâti et donc aux organes de la machine. De plus, au moins deux des dispositifs actionnant la tête d'usinage selon les trois axes X, Y, Z de référence étant disposés "sur le toit" du bâti et donc loin de la zone d'usinage, ils sont beaucoup moins affectés par la chaleur dégagée dans cette zone; enfin, le bac n'étant plus très proche d'une colonne ou des piliers d'un portique l'air circule largement autour.

Ces deux premiers avantages sont encore renforcés dans le cas de la variante constituée par une structure monobloc ou dans celle ou l'ensemble des moyens pour déplacer la tête d'usinage selon les axes de référence X, Y et Z, a lui aussi une structure symétrique telle celle décrite dans la demande parallèle (E. 228 A). On utilise de préférence des matériaux à bonne stabilité thermique, tels certains bétons polymères, en particulier à base de résines époxy ou de poudres céramiques pour le bâti, du Kevlar par exemple pour le bac d'usinage, des céramiques pour le système à mouvements croisés X et Y.

La pièce et donc le bac étant fixes, celà élimine tout problème de débordement du diélectrique hors du bac de travail lors de mouvements relatifs rapides et surtout des accélérations selon X, Y, usuels en fraisage EDM. Mais surtout, comme pour toute machine à pièce fixe, la précision de l'usinage et sa reproductibilité est pratiquement indépendante des dimensions et du poids de la pièce à usiner.

On a mentionné ci-dessus une variante particulièrement interessante de la structure selon la présente invention, dans laquelle le dispositif du mouvement Z traverse les chariots des mouvements X et Y; l'axe Z est en particulier avantageusement confondu avec le centre de symétrie de l'un de ces chariots, tandis qu'il garde toujours un point commun avec l'autre axe. Cette disposition renforce encore la symétrie de la machine, et surtout diminue au maximum les moments d'inerties selon les axes de déplacement, renforçant ainsi les avantages déjà mentionnés ci-dessus.

Ajoutons qu'une structure selon la présente invention est de construction mécanique simple, peu coûteuse. Comme au moins deux des dispositifs actionnant la tête d'usinage selon les trois axes X, Y, Z de référence sont disposés "sur le toit" du bâti, ceci libére donc les abords de la zone d'usinage; la machine est ainsi beaucoup plus compacte et présente une zone d'usinage plus accessible, car deux côtés au moins sont entièrement dégagés, par suite de la disposition en hauteur des mouvements X et Y souvent encombrants.
Un autre avantage est que les mouvements selon X et Y ne sont limités par aucun obstacle latéral. De plus, grâce aux larges ouvertures ménagées dans les faces latérales du cube et à un bac rétractable, la zone d'usinage reste très accessible. Le socle de la machine n'est plus un caisson fermé de tous les côtés et surmonté d'une table; Le volume à l'intérieur du cube est très dégagé et peut être avantageusement occupé par exemple par les organes composant le circuit du diélectrique, ainsi que par un changeur-présentoir d'outils. Tout l'espace compris entre les piliers ou arêtes du cube, la table de travail et la tête d'usinage peut être occupé par la pièce à usiner.

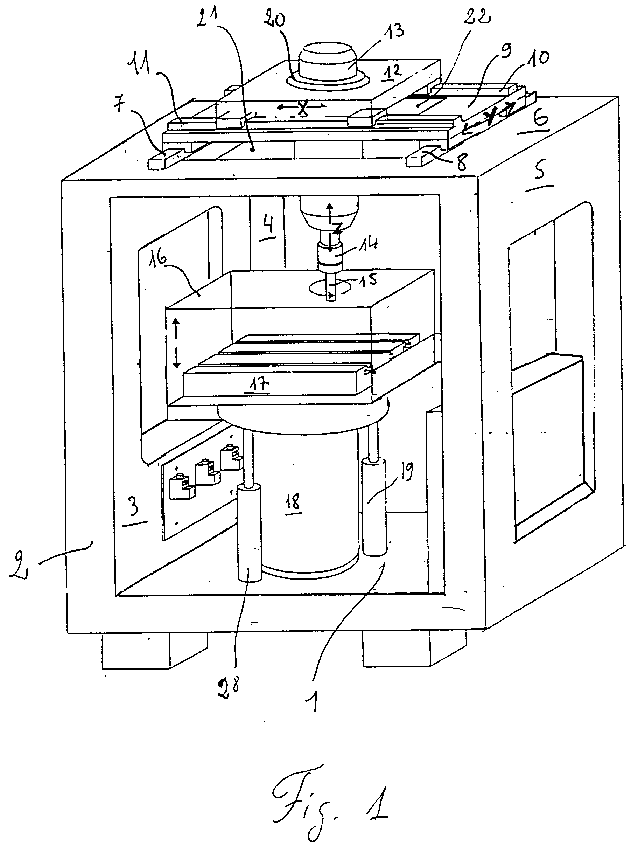

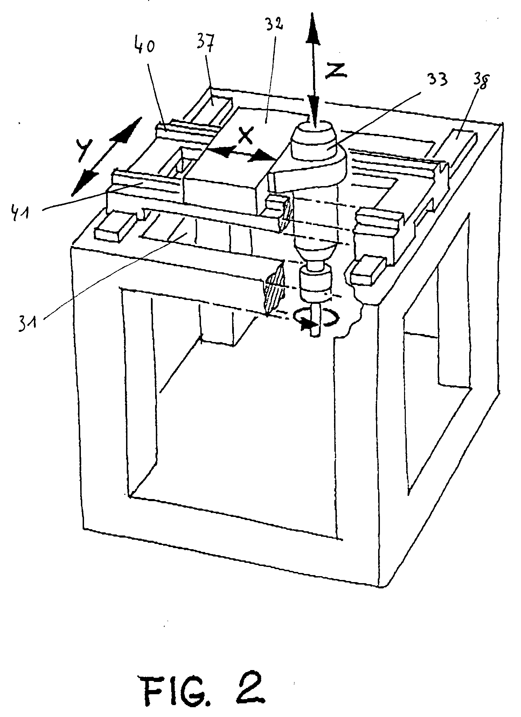

## Revendications

1. Machine d'électroérosion permettant d'usiner une pièce à usiner stationnaire avec un régime à fort taux d'usure, comportant un dispositif destiné à déplacer la tête d'usinage de la machine selon l'axe Z et éventuellement à entraîner en rotation l'électrode-outil montée dans cette tête, ainsi qu'un système à mouvements croisés constitué par deux chariots coulissant chacun selon l'un des axes de référence X et Y de la machine et destinés à déplacer la tête d'usinage selon ces axes,
caractérisée par un bâti en forme de cube constitué par quatre parois verticales reliées entre elles de manière à délimiter une enceinte carrée, toutes solidaire d'un même socle formant la face inférieure du cube ainsi que de l'élément horizontal, percé d'une ouverture, formant la face supérieure du cube, et
dans laquelle l'ensemble constitué par le dispositif destiné à déplacer la tête d'usinage selon l'axe Z et par au moins l'un des chariots du système à mouvements croisés est monté au-dessus de la face supérieure du cube, reposant ainsi sur quatre piliers formés par les arêtes du cube délimitées par les quatre parois verticales,
- l'ouverture ménagée dans la face supérieure du cube étant profilée de manière appropriée pour laisser la liberté à cet ensemble de se déplacer selon au moins l'un des axes X et Y,
- le bac d'usinage et la table de travail étant fixes pendant l'usinage et disposés à l'intérieur du cube, et
- au moins certaines des quatre parois verticales étant largement évidées de manière à rendre accessible la table de travail.

2. Machine d'électroérosion selon la revendication 1, dans laquelle le dispositif destiné à déplacer la tête d'usinage selon l'axe Z traverse au moins l'un des chariots du système à mouvements croisés, de préférence de façon que l'axe Z soit confondu avec le centre de symétrie de ce chariot.

3. Machine d'électroérosion selon la revendication 1, dans laquelle cette structure en cube ouvert est réalisée sous forme de monobloc.

4. Machine d'électroérosion selon la revendication 1, dans laquelle le bac d'usinage est rétractable.

5. Machine d'électroérosion selon la revendication 1, dans laquelle le deuxième chariot du système à mouvements croisés, est aussi monté au-dessus de la face supérieure du cube, au-dessus ou au-dessous du premier chariot, de préférence de façon que le dispositif destiné à déplacer la tête d'usinage selon l'axe Z traverse la superposition des deux chariots de façon que l'axe Z soit confondu avec le centre de symétrie de l'un de ces chariots, tandis qu'il garde toujours un point commun avec l'axe correspondant au deuxième chariot.
